# EUROPÄISCHE PATENTSCHRIFT

(11) **EP 2 531 383 B1**
(45) Veröffentlichungstag und Bekanntmachung des Hinweises auf die Patenterteilung: **10.12.2014**
(21) Anmeldenummer: 11711751.5
(22) Anmeldetag: 27.01.2011
(51) Int. Cl.: B60R 22/34

(54) **GURTAUFROLLERRAHMEN**
SEAT BELT RETRACTOR FRAME
CHASSIS POUR UN RÉTRACTEUR DE CEINTURE DE SÉCURITÉ

(30) Priorität: 02.02.2010 DE 102010006955
(43) Veröffentlichungstag der Anmeldung: 12.12.2012
(73) Patentinhaber: Takata AG, 63743 Aschaffenburg (DE)
(72) Erfinder: SCHRADE, Wolfgang, 89134 Blaustein (DE); DIVO, Hans-Jürgen, 89129 Langenau (DE)
(74) Vertreter: Fischer, Uwe
(86) Internationale Anmeldenummer: PCT/DE2011/050001
(87) Internationale Veröffentlichungsnummer: WO 2011/095161

(56) Entgegenhaltungen:
- DE-A1- 3 343 104
- DE-A1- 3 402 245
- DE-A1- 19 510 603
- DE-A1-102006 049 839
- GB-A- 2 020 963
- US-A- 4 621 836

## Beschreibung

Die Erfindung bezieht sich auf einen Gurtaufrollerrahmen, der zu einer Befestigung in einem Fahrzeug geeignet ist.

Die Druckschrift DE 195 10 603 offenbart einen Gurtaufrollerrahmen mit zwei Haken, die zum Einhängen des Gurtaufrollerrahmens in einem Karosserieblech geeignet sind, sowie mit einer Lasche. Weitere Gurtaufrollerrahmen sind aus der US-Patentschrift US 46 21 836 und der deutschen Offenlegungsschrift DE 10 2005 055 681 A1 bekannt.

Die Befestigung eines Gurtaufrollers in einem Fahrzeug muss aus Kostengründen schnell durchgeführt werden können. Der Erfindung liegt demgemäß die Aufgabe zugrunde, einen Gurtaufrollerrahmen anzugeben, der eine schnelle Montage im Fahrzeug ermöglicht.

Diese Aufgabe wird erfindungsgemäß durch einen Gurtaufrollerrahmen mit den Merkmalen gemäß Patentanspruch 1 gelöst. Vorteilhafte Ausgestaltungen des erfindungsgemäßen Gurtaufrollerrahmens sind in Unteransprüchen angegeben.

Ein wesentlicher Vorteil des erfindungsgemäßen Gurtaufrollerrahmens ist darin zu sehen, dass dieser eine sehr einfache Montage erlaubt, da der Gurtaufrollerrahmen zur Montage oder Vormontage lediglich in ein Fahrzeugblech eingehängt werden muss. Trotzdem ist eine feste Verbindung und spätere "Klapperfreiheit" der Verbindung sichergestellt, da die erfindungsgemäß vorgesehene Lasche den Gurtaufrollerrahmen mit dem Fahrzeugblech anschaulich beschrieben verklemmt und den Gurtaufrollerrahmen spielfrei fixiert. Selbstverständlich ist es nach einem Einhängen des Gurtaufrollerrahmens möglich, diesen mit weiteren Hilfsmitteln noch weiter zu befestigen, um ein Abreißen des Gurtaufrollers beispielsweise im Falle eines Unfalls zu vermeiden.

Ein weiterer wesentlicher Vorteil des erfindungsgemäßen Gurtaufrollerrahmens besteht darin, dass die Montage auch an einem geradlinigen, also einschnittsfreien Blechrand eines Fahrzeugbleches möglicht ist. Es sind also keine Einschnitte im Bereich des Blechrandes nötig, um eine Befestigung zu ermöglichen. Die Montage oder Vormontage ist also nicht auf bestimmte vorgegebene Blechrandgeometrien festgelegt oder beschränkt.

Zwischen dem Auflageabschnitt und dem hintergreifenden Abschnitt ist vorzugsweise ein 90°-Kurvenabschnitt bzw. eine 90°-Biegung angeordnet, so dass der Auflageabschnitt und der hintergreifende Abschnitt senkrecht aufeinander stehen.

Aus Kostengründen wird es als vorteilhaft angesehen, wenn der Gurtaufrollerrahmen ein Rahmenblech aufweist und der mindestens eine Haken durch einen Blechauschnitt gebildet ist, der aus der Rahmenblechebene herausgebogen ist.

Besonders bevorzugt ist der Gurtaufrollerrahmen durch ein einteiliges, mehrfach gebogenes Rahmenblech gebildet, das mehrere Rahmenblechabschnitte und mehrere Rahmenblechebenen aufweist; in diesem Falle wird der mindestens eine Haken vorzugsweise durch einen Blechabschnitt gebildet, der aus der Rahmenblechebene eines der Rahmenblechabschnitte herausgebogen ist.

Vorzugsweise ist der Auflageabschnitt des mindestens einen Hakens durch einen ersten Teilblechabschnitt gebildet, der einen Winkel von 90 Grad zu der Rahmenblechebene aufweist. Der hintergreifende Abschnitt des mindestens einen Hakens ist vorzugsweise durch einen zweiten Teilblechabschnitt gebildet, dessen Erstreckungsrichtung parallel zu der Rahmenblechebene verläuft.

Der zweite Teilblechabschnitt ist bevorzugt derart ausgestaltet, dass er nach einem Einhängen des Gurtaufrollerrahmens mit einer inneren Blechkante an der Rückseite des Fahrzeugblechs anliegt.

Bezüglich der mindestens einen Lasche wird es als vorteilhaft angesehen, wenn sich diese von ihrem Verbindungsbereich, der die Lasche mit dem übrigen Gurtaufrollerrahmen verbindet, entlang einer Richtung erstreckt, die antiparallel zu der Erstreckungsrichtung des hintergreifenden Abschnitts des Hakens verläuft. Unter einer antiparallelen Ausrichtung wird dabei verstanden, dass sich die Lasche zwar parallel zu dem hintergreifenden Abschnitt erstreckt, jedoch die Richtungen entgegengesetzt sind.

Die mindestens eine Lasche und der mindestens eine Haken sind vorzugsweise aus derselben Rahmenblechebene desselben Rahmenblechabschnitts herausgebogen.

Mit Blick auf eine sichere Befestigung des Gurtaufrollerrahmens wird es als vorteilhaft angesehen, wenn der Gurtaufrollerrahmen zwei Haken und eine Lasche aufweist, wobei die Lasche - in einer Sicht senkrecht zur Rahmenblechebene des Rahmenblechs gesehen - bevorzugt mittig zwischen den zwei Haken angeordnet ist.

Auch wird es als vorteilhaft angesehen, wenn ein weiterer Rahmenblechabschnitt vorhanden ist, der senkrecht zu dem Rahmenblechabschnitt mit den mindestens zwei Haken angeordnet ist, in dem weiteren Rahmenblechabschnitt ein Loch mit einer Sperrverzahnung vorhanden ist, in die ein Sperrflansch des Gurtaufrollers einsetzbar ist, und die Anordnung der zwei Haken derart gewählt ist, dass eine virtuelle Verbindungslinie zwischen den Auflageabschnitten der zwei Haken parallel zur Drehachse des eingesetzten Sperrflansches verläuft.

Der mindestens eine Haken und die mindestens eine Lasche sind vorzugsweise derart geformt und angeordnet, dass der Gurtaufrollerrahmen auf einem geradlinigen freischnittsfreien Blechrandabschnitt eines Blechrands des Fahrzeugblechs aufgesetzt werden kann.

Die Erfindung bezieht sich darüber hinaus auf einen Gurtaufroller mit einem Gurtaufrollerrahmen, wie er oben beschrieben worden ist, einer Sperrbasis und einer Sperrverzahnung.

Die Erfindung bezieht sich außerdem auf eine Anordnung mit einem Gurtaufrollerrahmen, wie er oben beschrieben worden ist.

Erfindungsgemäß ist bezüglich dieser Anordnung vorgesehen, dass mindestens zwei Haken des Gurtaufrollerrahmens auf einem geradlinigen freischnittsfreien Blechrandabschnitt eines Blechrands des Fahrzeugblechs aufgesetzt sind.

Hinsichtlich der Vorteile der erfindungsgemäßen Anordnung sei auf die obigen Ausführungen zu den Vorteilen des erfindungsgemäßen Gurtaufrollerrahmens verwiesen, da die Vorteile der erfindungsgemäßen Anordnung denen des erfindungsgemäßen Gurtaufrollerrahmens im Wesentlichen entsprechen.

Vorzugsweise ist der Gurtaufrollerrahmen auf einen geradlinigen Blechrandabschnitt eines Blechrands einer B-Säule des Fahrzeugs aufgesetzt.

Besonders bevorzugt verläuft eine virtuelle Verbindungslinie zwischen den Auflageabschnitten der mindestens zwei Haken horizontal.

Die hintergreifenden Abschnitte der mindestens zwei Haken verlaufen vorzugsweise parallel zueinander; entsprechendes gilt für die Auflageabschnitte, die vorzugsweise ebenfalls parallel zueinander verlaufen.

Die Erfindung wird nachfolgend anhand von Ausführungsbeispielen näher erläutert; dabei zeigen beispielhaft
- Figur 1: ein Ausführungsbeispiel für einen erfindungsgemäßen Gurtaufrollerrahmen nach einer Montage an einem Fahrzeugblech in einer dreidimensionalen Sicht, betrachtet von der Rückseite des Fahrzeugblechs,
- Figur 2: die Ausgestaltung der Haken bei dem Ausführungsbeispiel gemäß Figur 1 in einer Detaildarstellung,
- Figur 3: das Ausführungsbeispiel gemäß Figur 1 in einer anderen Darstellung und
- Figur 4: das Ausführungsbeispiel gemäß Figur 1 in einer dreidimensionalen Sicht, betrachtet von der Vorderseite des Fahrzeugblechs.

In den Figuren werden aus Gründen der Übersicht für identische Teile stets dieselben Bezugszeichen verwendet.

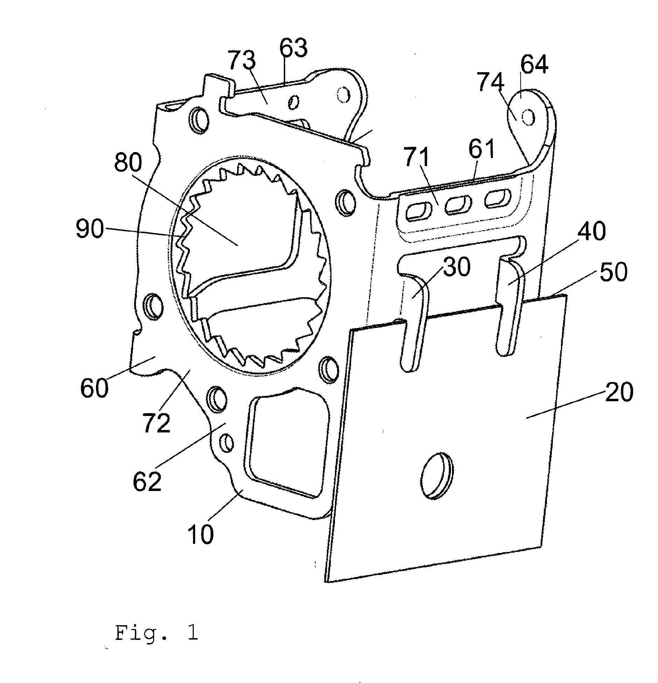

In der Figur 1 sieht man eine Anordnung mit einem Gurtaufrollerrahmen 10 und einem Fahrzeugblech 20 eines nicht weiter gezeigten Fahrzeugs. Das Fahrzeugblech 20 kann beispielsweise einen Bestandteil einer nicht weiter dargestellten B-Säule des Fahrzeugs bilden.

Es lässt sich in der Figur 1 erkennen, dass der Gurtaufrollerrahmen 10 mit zwei Haken 30 und 40 ausgestattet ist, die auf einem geradlinigen freischnittsfreien Blechrandabschnitt eines Blechrands 50 des Fahrzeugblechs 20 aufgesetzt sind.

Der Gurtaufrollerrahmen 10 ist vorzugsweise durch ein einteiliges, mehrfach gebogenes Rahmenblech 60 gebildet und weist demgemäß eine Mehrzahl an Rahmenblechabschnitten 61, 62, 63 und 64 auf, die in verschiedenen Rahmenblechebenen 71, 72, 73 und 74 angeordnet sind. Die Rahmenblechebenen 71 und 73 sowie die Rahmenblechebenen 72 und 74 sind parallel, zumindest näherungsweise parallel, angeordnet.

In dem Rahmenblechabschnitt 62 ist ein Loch 80 mit einer Sperrverzahnung 90 angeordnet, in die ein nicht weiter gezeigter Sperrflansch des Gurtaufrollers einsetzbar ist. Der Rahmenblechabschnitt 62 steht senkrecht auf dem Rahmenblechabschnitt 61, in dem die zwei Haken 30 und 40 angeordnet sind.

Die Figur 1 zeigt, dass die Anordnung der zwei Haken 30 und 40 derart gewählt ist, dass eine virtuelle Verbindungslinie zwischen den Auflageabschnitten der zwei Haken auf dem Blechrand 50 parallel zur Drehachse des eingesetzten Sperrflansches und damit vorzugsweise horizontal verlaufen würde.

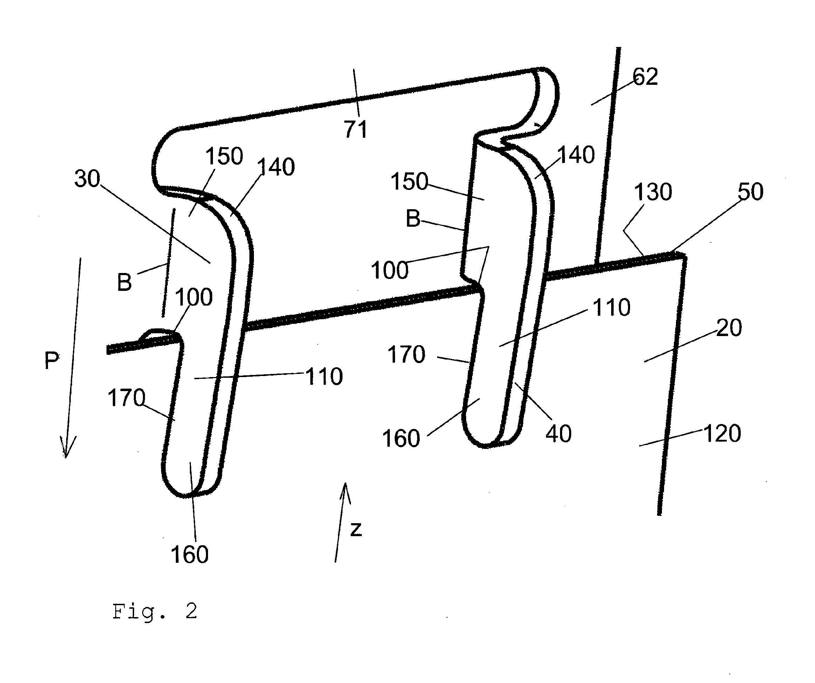

Die beiden Haken 30 und 40 sind in der Figur 2 näher im Detail dargestellt. Es lässt sich erkennen, dass die Haken 30 und 40 jeweils durch einen Blechabschnitt gebildet sind, der aus der Rahmenblechebene 71 des zugeordneten Rahmenblechabschnitts 61 entlang einer Biegekante B herausgebogen ist.

Die Haken 30 und 40 weisen jeweils einen Auflageabschnitt 100 auf, der nach dem Einhängen des jeweiligen Hakens auf dem Blechrand 50 des Fahrzeugblechs 20 aufliegt. An den Auflageabschnitt schließt sich jeweils ein hintergreifender Abschnitt 110 an, der nach dem Einhängen des jeweiligen Hakens die Rückseite 120 des Fahrzeugblechs 20 hintergreift, sobald der Gurtaufrollerrahmen 10 an der Vorderseite 130 des Fahrzeugblechs 20 montiert bzw. eingehängt wird.

Der Auflageabschnitt 100 und der hintergreifende Abschnitt 110 sind durch einen 90°-Kurvenabschnitt 140 miteinander verbunden, so dass der Auflageabschnitt 100 und der hintergreifende Abschnitt 110 senkrecht aufeinander stehen.

Der Auflageabschnitt 100 der beiden Haken 30 und 40 ist jeweils durch einen ersten Teilblechabschnitt 150 gebildet, der aufgrund der Biegekante B einen Winkel von 90 Grad zu der Rahmenblechebene 71 des Rahmenblechs 61 und einen Winkel von 90 Grad zu der z-Richtung des Fahrzeugkoordinatensystems aufweist.

Der hintergreifende Abschnitt 110 ist jeweils durch einen zweiten Teilblechabschnitt 160 gebildet, dessen Erstreckungsrichtung P parallel zu der Rahmenblechebene 71 und entgegen der z-Richtung des Fahrzeugkoordinatensystems verläuft.

Der zweite Teilblechabschnitt 160 liegt nach einem Einhängen des Gurtaufrollerrahmens 10 mit einer inneren Blechkante 170 des zweiten Teilblechabschnitts 160 vorzugsweise an der Rückseite 120 des Fahrzeugblechs 20 an.

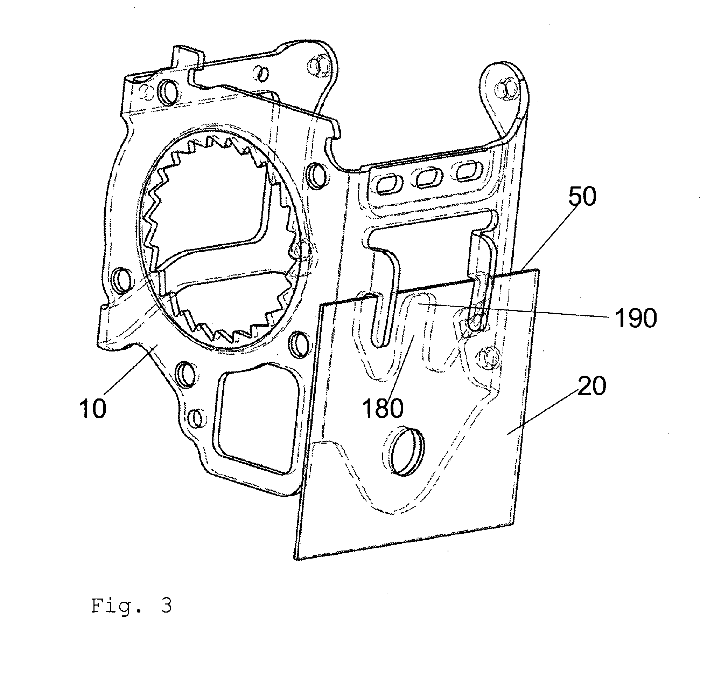

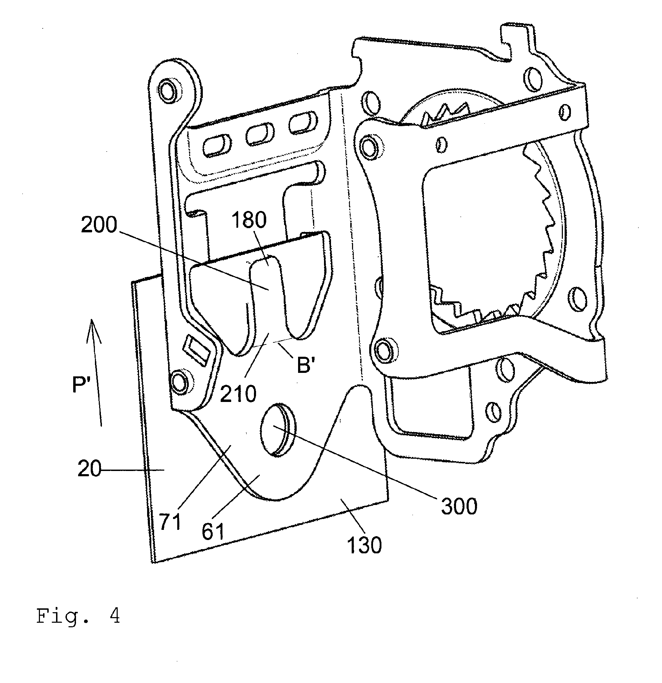

Die Figur 3 zeigt den Gurtaufrollerrahmen 10 in einer anderen Darstellung, in der man die hinter dem Fahrzeugblech 20 befindlichen Teile des Gurtaufrollerrahmens 10 gemäß Figur 1 zusätzlich erkennen kann. Die Figur 4 zeigt den Gurtaufrollerrahmen 10 von vorne in einer Sicht auf die Vorderseite 130 des Fahrzeugblechs 20. Nachfolgend wird auf beide Figuren 3 und 4 Bezug genommen.

Die Figuren 3 und 4 zeigen eine gebogene Lasche 180, deren Funktion darin besteht, nach einem Einhängen des Gurtaufrollerrahmens 10 eine Vorspannung mit dem Fahrzeugblech 20 zu erzeugen und dabei eine Druckspannung auf das Fahrzeugblech 20 auszuüben.

Es lässt sich in den Figuren 3 und 4 erkennen, dass der Oberflächenabschnitt 190 des Fahrzeugblechs 20, auf den die Lasche 180 einen Druck ausübt, von dem Blechrand 50 des Fahrzeugblechs 20 beabstandet ist.

Die Lasche 180 ist durch einen Blechabschnitt 200 des Rahmenblechabschnitts 61 gebildet, der aus der Rahmenblechebene 71 in Richtung Fahrzeugblech 20 herausgebogen ist.

Die Lasche 180 und die beiden Haken 30 und 40 sind also aus derselben Rahmenblechebene 71 desselben Rahmenblechabschnitts 61 herausgebogen.

In den Figuren 3 und 4 lässt sich außerdem erkennen, dass die gebogene Lasche 180 einen Verbindungsbereich 210 aufweist, mit dem sie an den übrigen Rahmenblechabschnitt 61 angebunden ist. Von diesem Verbindungsbereich 210 bzw. von der Biegekante B' erstreckt sich die Lasche 180 entlang einer Richtung P', die antiparallel zu der Erstreckungsrichtung P der beiden hintergreifenden Abschnitte 110 der beiden Haken 30 und 40 ist (vgl. Figur 2). Unter einer antiparallelen Ausrichtung wird dabei verstanden, dass sich die Lasche 180 zwar parallel zu den hintergreifenden Abschnitten 110 erstreckt, jedoch die Richtungen entgegengesetzt sind.

Die Biegekanten bzw. Falzkanten B der beiden Haken 30 und 40 an dem Übergang zur Rahmenblechebene 71 stehen vorzugsweise senkrecht zu der oder den Biegekanten B' bzw. Falzkanten der Lasche 180. So verlaufen die Biegekanten B bzw. Falzkanten der beiden Haken 30 und 40 vorzugsweise senkrecht zu der virtuellen Verbindungslinie zwischen den Auflageabschnitten 100 der zwei Haken 30 und 40 auf dem Blechrand 50 und senkrecht zur Drehachse des eingesetzten Sperrflansches und damit entlang der z-Richtung des Fahrzeugkoordinatensystems (vgl. Figuren 1 und 2). Die Biegekanten B' bzw. Falzkanten der Lasche 180 verlaufen hingegen vorzugsweise parallel zu der virtuellen Verbindungslinie zwischen den Auflageabschnitten 100 der zwei Haken 30 und 40 auf dem Blechrand 50 und parallel zur Drehachse des eingesetzten Sperrflansches und damit senkrecht zur z-Richtung des Fahrzeugkoordinatensystems.

Den Figuren 1 bis 4 lässt sich darüber hinaus entnehmen, dass die Lasche 180 - in einer Sicht senkrecht zur Rahmenblechebene 71 des Rahmenblechabschnitts 61 gesehen - vorzugsweise mittig zwischen den zwei Haken 30 und 40 angeordnet ist; eine solche Anordnung fördert eine gleichmäßige Druckverteilung und eine sichere Befestigung des Gurtaufrollerrahmens 10 nach der Montage an dem Fahrzeugblech 20.

Wie die Figuren 1 bis 4 beispielhaft zeigen, kann der Gurtaufrollerrahmen 10 zusätzlich ein oder mehrere Befestigungslöcher 300 aufweisen, die ein Verschrauben des Gurtaufrollerrahmens 10 mit dem Fahrzeugblech 20 nach dem Einhängen an dem Blechrand 50 ermöglichen.

### Bezugszeichenliste

- 10: Gurtaufrollerrahmen
- 20: Fahrzeugblech
- 30: Haken
- 40: Haken
- 50: Blechrand
- 60: Rahmenblech
- 61, 62: Rahmenblechabschnitt
- 63, 64: Rahmenblechabschnitt
- 71, 72: Rahmenblechebene
- 73, 74: Rahmenblechebene
- 80: Loch
- 90: Sperrverzahnung
- 100: Auflageabschnitt
- 110: hintergreifender Abschnitt
- 120: Rückseite
- 130: Vorderseite
- 140: Kurvenabschnitt
- 150: erster Teilblechabschnitt
- 160: zweiter Teilblechabschnitt
- 170: innere Blechkante
- 180: Lasche
- 190: Oberflächenabschnitt
- 200: Blechabschnitt
- 210: Verbindungsbereich
- 300: Befestigungsloch

- B: Biegekante
- B': Biegekante
- P: Erstreckungsrichtung
- P': Richtung
- z: vertikale Fahrzeugrichtung

## Patentansprüche

1. Gurtaufrollerrahmen (10), der zu einer Befestigung in einem Fahrzeug geeignet ist, wobei der Gurtaufrollerrahmen aufweist:
- mindestens einen Haken (30, 40) zum Einhängen des Gurtaufrollerrahmens in ein Fahrzeugblech (20) und
- mindestens eine gebogene Lasche (180),
**dadurch gekennzeichnet, dass**
- die mindestens eine gebogene Lasche (180) nach einem Einhängen des mindestens einen Hakens eine Vorspannung mit dem Fahrzeugblech erzeugt,
- der mindestens eine Haken (30, 40) zum Einhängen an einem geradlinigen Randabschnitt eines Blechrands des Fahrzeugsblechs geeignet ist und auf der Rückseite (120) des Fahrzeugblechs anliegt,
- die mindestens eine gebogene Lasche durch einen Blechabschnitt eines Rahmenblechs gebildet wird, der aus einer Rahmenblechebene des Gurtaufrollerrahmens in Richtung Fahrzeugblech herausgebogen ist, und zwar derart, dass die Lasche auf einen Oberflächenabschnitt auf der Vorderseite des Fahrzeugblechs eine Druckspannung ausübt,
- wobei der Oberflächenabschnitt auf der Vorderseite des Fahrzeugblechs, auf den die Lasche die Druckspannung ausübt, einen Abstand von dem geradlinigen Blechrand des Fahrzeugsblechs aufweist.

2. Gurtaufrollerrahmen nach Anspruch 1,
**dadurch gekennzeichnet, dass**
der mindestens eine Haken aufweist:
- einen Auflageabschnitt (100), der nach dem Einhängen des Hakens auf einem Blechrand (50) des Fahrzeugblechs aufliegt, und
- einen sich an den Auflageabschnitt anschließenden hintergreifenden Abschnitt (110), der die Rückseite (120) des Fahrzeugblechs hintergreift, nachdem der Gurtaufrollerrahmen von der Vorderseite (130) des Fahrzeugblechs eingehängt wurde.

3. Gurtaufrollerrahmen nach einem der voranstehenden Ansprüche,
**dadurch gekennzeichnet, dass**
- der Gurtaufrollerrahmen durch ein einteiliges, mehrfach gebogenes Rahmenblech (60) mit mehreren Rahmenblechabschnitten (61, 62, 63, 64) gebildet ist und
- der mindestens eine Haken durch einen Blechabschnitt gebildet ist, der aus der Rahmenblechebene (71) eines der Rahmenblechabschnitte (61) herausgebogen ist.

4. Gurtaufrollerrahmen nach einem der voranstehenden Ansprüche,
**dadurch gekennzeichnet,**
- **dass** der Auflageabschnitt (100) des mindestens einen Hakens zu einem ersten Teilblechabschnitt (150) gehört, der einen Winkel von 90 Grad zu der Rahmenblechebene (71) aufweist,
- **dass** der hintergreifende Abschnitt (110) des mindestens einen Hakens durch einen zweiten Teilblechabschnitt (160) gebildet ist und
- **dass** die Erstreckungsrichtung (P) des zweiten Teilblechabschnitts parallel zu der Rahmenblechebene (71) verläuft.

5. Gurtaufrollerrahmen nach Anspruch 4,
**dadurch gekennzeichnet, dass**
der zweite Teilblechabschnitt nach einem Einhängen des Gurtaufrollerrahmens mit einer inneren Blechkante (170) an der Rückseite (120) des Fahrzeugblechs anliegt.

6. Gurtaufrollerrahmen nach einem der voranstehenden Ansprüche,
**dadurch gekennzeichnet,**
**dass** sich die mindestens eine gebogene Lasche von ihrem Verbindungsbereich (210), der sie mit dem übrigen Gurtaufrollerrahmen verbindet, entlang einer Richtung erstreckt, die antiparallel zu der Erstreckungsrichtung des hintergreifenden Abschnitts des Hakens verläuft.

7. Gurtaufrollerrahmen nach einem der voranstehenden Ansprüche,
**dadurch gekennzeichnet, dass**
die mindestens eine Lasche durch einen Blechabschnitt (200) eines Rahmenblechs (60) gebildet ist, der aus einer Rahmenblechebene(61) des Rahmenblechs herausgebogen ist.

8. Gurtaufrollerrahmen nach Anspruch 7,
**dadurch gekennzeichnet, dass**
die mindestens eine Lasche und der mindestens eine Haken aus derselben Rahmenblechebene (71) desselben Rahmenblechabschnitts (61) herausgebogen sind.

9. Gurtaufrollerrahmen nach einem der voranstehenden Ansprüche,
**dadurch gekennzeichnet, dass**
- in einem Rahmenblechabschnitt (61) des Rahmenbleches (60) mindestens zwei Haken (30, 40) und mindestens eine Lasche (180) herausgebogen sind,
- ein weiterer Rahmenblechabschnitt (62) vorhanden ist, der senkrecht zu dem genannten Rahmenblechabschnitt (61) angeordnet ist,
- in dem weiteren Rahmenblechabschnitt ein Loch (80) mit einer Sperrverzahnung (90) vorhanden ist, in die ein Sperrflansch des Gurtaufrollers einsetzbar ist, und
- die Anordnung der zwei Haken derart gewählt ist, dass eine virtuelle Verbindungslinie zwischen den Auflageabschnitten (100) der zwei Haken parallel zur Drehachse des eingesetzten Sperrflansches verläuft.

10. Gurtaufrollerrahmen (10) nach einem der voranstehenden Ansprüche, der zu einer Befestigung in einem Fahrzeug geeignet ist,
- wobei der Gurtaufrollerrahmen durch ein einteiliges, mehrfach gebogenes Rahmenblech (60) mit mehreren Rahmenblechabschnitten (61, 62, 63, 64) gebildet ist,
- wobei der Gurtaufrollerrahmen mindestens einen Haken (30, 40) zum Einhängen des Gurtaufrollerrahmens in ein Fahrzeugblech (20) aufweist,
- wobei der mindestens eine Haken (30, 40) durch einen Blechabschnitt gebildet ist, der aus der Rahmenblechebene (71) eines der Rahmenblechabschnitte (61) herausgebogen ist,
- wobei ein weiterer Rahmenblechabschnitt (62) senkrecht zu dem einen Rahmenblechabschnitt (61) angeordnet ist,
- wobei in dem weiteren Rahmenblechabschnitt ein Loch (80) mit einer Sperrverzahnung (90) vorhanden ist, in die ein Sperrflansch des Gurtaufrollers einsetzbar ist,
- wobei der Gurtaufrollerrahmen mindestens eine gebogene Lasche (180) aufweist, die nach einem Einhängen des mindestens einen Hakens eine Vorspannung mit dem Fahrzeugblech erzeugt, und
- wobei die Biegekante (B) des mindestens einen Hakens (30, 40) an dem Übergang zur Rahmenblechebene (71) des einen Rahmenblechabschnitts (61) senkrecht zur Drehachse eines eingesetzten Sperrflansches verläuft.

11. Gurtaufrollerrahmen nach einem der voranstehenden Ansprüche,
**dadurch gekennzeichnet, dass**
die mindestens eine Lasche (180) und der mindestens eine Haken aus derselben Rahmenblechebene (71) desselben Rahmenblechabschnitts (61) herausgebogen sind, und
die Biegekante (B') der Lasche (180) senkrecht zu der Biegekante (B) des mindestens einen Hakens steht und parallel zur Drehachse eines eingesetzten Sperrflansches verläuft.

12. Gurtaufrollerrahmen nach einem der voranstehenden Ansprüche,
**dadurch gekennzeichnet, dass**
- in dem einen Rahmenblechabschnitt (61) des Rahmenbleches (60) mindestens zwei Haken (30, 40) und mindestens eine Lasche (180) herausgebogen sind,
- die Anordnung der zwei Haken derart gewählt ist, dass eine virtuelle Verbindungslinie zwischen den Auflageabschnitten (100) der zwei Haken parallel zur Drehachse des eingesetzten Sperrflansches verläuft, und
- die Biegekanten (B) der beiden Haken senkrecht zu der virtuellen Verbindungslinie verlaufen.

13. Anordnung mit einem Gurtaufrollerrahmen (10) und einem Fahrzeugblech (20) nach einem der voranstehenden Ansprüche, **dadurch gekennzeichnet, dass**
- mindestens zwei Haken (30, 40) des Gurtaufrollerrahmens (10) auf einem geradlinigen freischnittsfreien Blechrandabschnitt eines Blechrands (50) des Fahrzeugblechs aufgesetzt sind und
- der Oberflächenabschnitt auf der Vorderseite des Fahrzeugblechs, auf den die Lasche die Druckspannung ausübt, einen Abstand von dem geradlinigen Blechrand aufweist.

## Claims

1. Belt retractor frame (10), which is suitable for fixing in a vehicle, wherein the belt retractor frame has:
- at least one hook (30, 40) for hooking the belt retractor frame into a vehicle panel (20) and
- at least one bent tab (180),
**characterized in that**
- the at least one bent tab (180) produces a preload with the vehicle panel after the at least one hook has been hooked in,
- the at least one hook (30, 40) is suitable for hooking in on a rectilinear edge section of a panel edge of the vehicle panel and rests against the rear side (120) of the vehicle panel,
- the at least one bent tab is formed by a plate section of a frame plate which is bent out of a frame plate plane of the belt retractor frame in the direction of the vehicle panel, specifically such that the tab exerts a pressure load on a surface section on the front side of the vehicle panel,
- wherein the surface section on the front side of the vehicle panel, on which the tab exerts the pressure load, is at a distance from the rectilinear panel edge of the vehicle panel.

2. Belt retractor frame according to Claim 1,
**characterized in that**
the at least one hook has:
- a bearing section (100), which rests on a panel edge (50) of the vehicle panel after the hook has been hooked in, and
- a rear engagement section (110), which adjoins the bearing section and engages behind the rear side (120) of the vehicle panel once the belt retractor frame has been hooked in from the front side (130) of the vehicle panel.

3. Belt retractor frame according to one of the preceding claims,
**characterized in that**
- the belt retractor frame is formed by an integral frame plate (60) which is bent several times and has a plurality of frame plate sections (61, 62, 63, 64), and
- the at least one hook is formed by a plate section which is bent out of the frame plate plane (71) of one of the frame plate sections (61).

4. Belt retractor frame according to one of the preceding claims,
**characterized in that**,
- the bearing section (100) of the at least one hook belongs to a first plate subsection (150), which is at an angle of 90 degrees to the frame plate plane (71),
- the rear engagement section (110) of the at least one hook is formed by a second plate subsection (160), and
- the direction of extension (P) of the second plate subsection is parallel to the frame plate plane (71).

5. Belt retractor frame according to Claim 4,
**characterized in that**
the second plate subsection rests against the rear side (120) of the vehicle panel by means of an inner plate edge (170) after the belt retractor frame has been hooked in.

6. Belt retractor frame according to one of the preceding claims,
**characterized in that**,
the at least one bent tab extends from the connecting region (210) thereof, which connects it to the rest of the belt retractor frame, in a direction which is antiparallel to the direction of extension of the rear engagement section of the hook.

7. Belt retractor frame according to one of the preceding claims,
**characterized in that**
the at least one tab is formed by a plate section (200) of a frame plate (60) which is bent out of a frame plate plane (61) of the frame plate.

8. Belt retractor frame according to Claim 7,
**characterized in that**
the at least one tab and the at least one hook are bent out of the same frame plate plane (71) of the same frame plate section (61).

9. Belt retractor frame according to one of the preceding claims,
**characterized in that**
- at least two hooks (30, 40) and at least one tab (180) are bent out in a frame plate section (61) of the frame plate (60),
- there is a further frame plate section (62), which is arranged perpendicularly to said frame plate section (61),
- there is a hole (80) with locking teeth (90) in the further frame plate section, into which teeth a locking flange of the belt retractor can be inserted, and
- the arrangement of the two hooks is chosen in such a way that a virtual connecting line between the bearing sections (100) of the two hooks runs parallel to the axis of rotation of the inserted locking flange.

10. Belt retractor frame (10) according to one of the preceding claims, which is suitable for fixing in a vehicle,
- wherein the belt retractor frame is formed by an integral frame plate (60) which is bent several times and has a plurality of frame plate sections (61, 62, 63, 64),
- wherein the belt retractor frame has at least one hook (30, 40) for hooking the belt retractor frame into a vehicle panel (20),
- wherein the at least one hook (30, 40) is formed by a plate section which is bent out of the frame plate plane (71) of one of the frame plate sections (61),
- wherein a further frame plate section (62) is arranged perpendicularly to one frame plate section (61),
- wherein there is a hole (80) with locking teeth (90) in the further frame plate section, into which teeth a locking flange of the belt retractor can be inserted,
- wherein the belt retractor frame has at least one bent tab (180), which produces a preload with the vehicle panel after the at least one hook has been hooked in, and
- wherein the bending edge (B) of the at least one hook (30, 40) is perpendicular to the axis of rotation of the inserted locking flange at the transition to the frame plate plane (71) of one frame plate section (61).

11. Belt retractor frame according to one of the preceding claims,
**characterized in that**
the at least one tab (180) and the at least one hook are bent out of the same frame plate plane (71) of the same frame plate section (61), and
the bending edge (B') of the tab (180) is perpendicular to the bending edge (B) of the at least one hook and runs parallel to the axis of rotation of an inserted locking flange.

12. Belt retractor frame according to one of the preceding claims,
**characterized in that**
- at least two hooks (30, 40) and at least one tab (180) are bent out in one frame plate section (61) of the frame plate (60),
- the arrangement of the two hooks is chosen in such a way that a virtual connecting line between the bearing sections (100) of the two hooks runs parallel to the axis of rotation of the inserted locking flange, and
- the bending edges (B) of the two hooks are perpendicular to the virtual connecting line.

13. Arrangement having a belt retractor frame (10) and a vehicle panel (20) according to one of the preceding claims,
**characterized in that**
- at least two hooks (30, 40) of the belt retractor frame (10) are placed on a rectilinear panel edge section, without cutouts, of a panel edge (50) of the vehicle panel, and
- the surface section on the front side of the vehicle panel, on which the tab exerts the pressure load, is at a distance from the rectilinear panel edge.

## Revendications

1. Châssis (10) de rétracteur de ceinture de sécurité qui est prévu pour être fixé dans un véhicule, le châssis de rétracteur de ceinture de sécurité présentant :
- au moins un crochet (30, 40) pour accrocher le châssis de rétracteur de ceinture de sécurité dans une tôle du véhicule (20) et
- au moins une languette recourbée (180),
**caractérisé en ce que**
- l'au moins une languette recourbée (180) produit, après l'accrochage de l'au moins un crochet, une précontrainte avec la tôle du véhicule,
- l'au moins un crochet (30, 40) est approprié pour l'accrochage à une portion de bord rectiligne d'un bord de tôle de la tôle du véhicule et s'applique sur le côté arrière (120) de la tôle du véhicule,
- l'au moins une languette recourbée est formée par une portion de tôle d'une tôle de châssis qui est recourbée hors d'un plan de tôle de châssis du châssis de rétracteur de ceinture de sécurité dans la direction de la tôle du véhicule, et ce de telle sorte que la languette exerce une contrainte de pression sur une portion de surface sur le côté avant de la tôle du véhicule,
- la portion de surface sur le côté avant de la tôle du véhicule sur laquelle la languette exerce la contrainte de pression étant à une certaine distance du bord de tôle rectiligne de la tôle du véhicule.

2. Châssis de rétracteur de ceinture de sécurité selon la revendication 1,
**caractérisé en ce que**
l'au moins un crochet présente :
- une portion d'appui (100) qui repose après l'accrochage du crochet sur un bord de tôle (50) de la tôle du véhicule, et
- une portion (110) venant en prise par l'arrière et se raccordant à la portion d'appui, laquelle vient en prise par l'arrière avec le côté arrière (120) de la tôle du véhicule après que le châssis de rétracteur de ceinture de sécurité a été accroché par le côté avant (130) de la tôle du véhicule.

3. Châssis de rétracteur de ceinture de sécurité selon l'une quelconque des revendications précédentes,
**caractérisé en ce que**
- le châssis de rétracteur de ceinture de sécurité est formé par une tôle de châssis (60) d'une seule pièce recourbée plusieurs fois, ayant plusieurs portions de tôle de châssis (61, 62, 63, 64) et
- l'au moins un crochet est formé par une portion de tôle qui est recourbée hors du plan de tôle de châssis (71) de l'une des portions de tôle de châssis (61).

4. Châssis de rétracteur de ceinture de sécurité selon l'une quelconque des revendications précédentes,
**caractérisé en ce que**
- la portion d'appui (100) de l'au moins un crochet appartient à une première portion de tôle partielle (150) qui présente un angle de 90° par rapport au plan de tôle de châssis (71),
- la portion venant en prise par l'arrière (110) de l'au moins un crochet est formée par une deuxième portion de tôle partielle (160) et
- la direction d'étendue (P) de la deuxième portion de tôle partielle s'étend parallèlement au plan de tôle de châssis (71).

5. Châssis de rétracteur de ceinture de sécurité selon la revendication 4,
**caractérisé en ce que**
la deuxième portion de tôle partielle, après un accrochage du châssis de rétracteur de ceinture de sécurité, s'applique avec une arête de tôle interne (170) contre le côté arrière (120) de la tôle du véhicule.

6. Châssis de rétracteur de ceinture de sécurité selon l'une quelconque des revendications précédentes,
**caractérisé en ce que**
l'au moins une languette recourbée s'étend depuis sa région de connexion (210) qui la relie au reste du châssis de rétracteur de ceinture de sécurité le long d'une direction qui s'étend de manière antiparallèle à la direction d'étendue de la portion du crochet venant en prise par l'arrière.

7. Châssis de rétracteur de ceinture de sécurité selon l'une quelconque des revendications précédentes,
**caractérisé en ce que**
l'au moins une languette est formée par une portion de tôle (200) d'une tôle de châssis (60) qui est recourbée hors d'un plan de tôle de châssis (61) de la tôle de châssis.

8. Châssis de rétracteur de ceinture de sécurité selon la revendication 7,
**caractérisé en ce que**
l'au moins une languette et l'au moins un crochet sont recourbés hors du même plan de tôle de châssis (71) de la même portion de tôle de châssis (61).

9. Châssis de rétracteur de ceinture de sécurité selon l'une quelconque des revendications précédentes,
**caractérisé en ce que**
- hors d'une portion de tôle de châssis (61) de la tôle de châssis (60) sont recourbés au moins deux crochets (30, 40) et au moins une languette (180),
- une autre portion de tôle de châssis (62) est prévue, laquelle est disposée perpendiculairement à ladite portion de tôle de châssis (61),
- dans l'autre portion de tôle de châssis est prévu un trou (80) avec une denture de verrouillage (90) dans laquelle peut être insérée une bride de verrouillage du rétracteur de ceinture de sécurité, et
- l'agencement des deux crochets est choisi de telle sorte qu'une ligne de connexion virtuelle entre les portions d'appui (100) des deux crochets s'étende parallèlement à l'axe de rotation de la bride de verrouillage insérée.

10. Châssis de rétracteur de ceinture de sécurité (10) selon l'une quelconque des revendications précédentes, qui est prévu pour être fixé dans un véhicule,
- le châssis de rétracteur de ceinture de sécurité étant formé par une tôle de châssis d'une seule pièce (60) recourbée plusieurs fois, ayant plusieurs portions de tôle de châssis (61, 62, 63, 64),
- le châssis de rétracteur de ceinture de sécurité présentant au moins un crochet (30, 40) pour accrocher le châssis de rétracteur de ceinture de sécurité dans une tôle du véhicule (20),
- l'au moins un crochet (30, 40) étant formé par une portion de tôle qui est recourbée hors du plan de tôle de châssis (71) de l'une des portions de tôle de châssis (61),
- une autre portion de tôle de châssis (62) étant disposée perpendiculairement à ladite une portion de tôle de châssis (61),
- dans l'autre portion de tôle de châssis étant prévu un trou (80) avec une denture de verrouillage (90) dans laquelle peut être insérée une bride de verrouillage du rétracteur de ceinture de sécurité,
- le châssis de rétracteur de ceinture de sécurité présentant au moins une languette recourbée (180) qui produit, après un accrochage de l'au moins un crochet, une précontrainte avec la tôle du véhicule, et
- l'arête de flexion (B) de l'au moins un crochet (30, 40) s'étendant au niveau de la transition vers le plan de tôle de châssis (71) de ladite une portion de tôle de châssis (61) perpendiculairement à l'axe de rotation d'une bride de verrouillage insérée.

11. Châssis de rétracteur de ceinture de sécurité selon l'une quelconque des revendications précédentes,
**caractérisé en ce que**
l'au moins une languette (180) et l'au moins un crochet sont recourbés hors du même plan de tôle de châssis (71) de la même portion de tôle de châssis (61), et
l'arête de flexion (B') de la languette (180) est perpendiculaire à l'arête de flexion (B) de l'au moins un crochet et s'étend parallèlement à l'axe de rotation d'une bride de verrouillage insérée.

12. Châssis de rétracteur de ceinture de sécurité selon l'une quelconque des revendications précédentes,
**caractérisé en ce que**
- hors de ladite une portion de tôle de châssis (61) de la tôle de châssis (60) sont recourbés au moins deux crochets (30, 40) et au moins une languette (180),
- l'agencement des deux crochets est choisi de telle sorte qu'une ligne de connexion virtuelle entre les portions d'appui (100) des deux crochets s'étende parallèlement à l'axe de rotation de la bride de verrouillage insérée, et
- les arêtes de flexion (B) des deux crochets s'étendent perpendiculairement à la ligne de connexion virtuelle.

13. Agencement comprenant un châssis de rétracteur de ceinture de sécurité (10) et une tôle de véhicule (20) selon l'une quelconque des revendications précédentes, **caractérisé en ce que**
- au moins deux crochets (30, 40) du châssis de rétracteur de ceinture de sécurité (10) sont posés sur une portion de bord de tôle rectiligne exempte d'évidement d'un bord de tôle (50) de la tôle du véhicule et
- la portion de surface sur le côté avant de la tôle du véhicule sur laquelle la languette exerce la contrainte de pression est à une certaine distance du bord de tôle rectiligne.
